# DEMANDE DE BREVET EUROPEEN

(11) **EP 4 560 943 A1**
(43) Date de publication de la demande: **28.05.2025**
(21) Numéro de dépôt: 24214643.9
(22) Date de dépôt: 21.11.2024
(51) Int. Cl.: H04B 17/00, H04B 17/12, H04B 17/14, H04B 17/17, H04B 17/21, H01Q 3/26

(54) **ANTENNE RÉSEAU AMÉLIORÉE POUR UNE CALIBRATION EN ÉMISSION ET/OU EN RÉCEPTION ; ENSEMBLES DE CALIBRATION EN ÉMISSION ET/OU EN RÉCEPTION**

(30) Priorité: 22.11.2023 FR 2312860
(71) Demandeur: THALES, 92190 Meudon (FR)
(72) Inventeur: PETIT, Vincent, 78851 ELANCOURT CEDEX (FR); PERRE, Jean-Michel, 26000 VALENCE (FR); LETESTU, Franck, 26000 VALENCE (FR); LOUIS, Bruno, 78851 ELANCOURT CEDEX (FR); CZARNY, Romain, 78851 ELANCOURT CEDEX (FR); PILLET, Grégoire, 78851 ELANCOURT CEDEX (FR); HURON, Jérémy, 78851 ELANCOURT CEDEX (FR)
(74) Mandataire: Lavoix

(57) **Abrégé**

La présente invention concerne une antenne réseau comportant une pluralité de voies, chaque voie (i) comportant une chaine d'émission (20_i) associée à un élément rayonnant (11_i), caractérisée en ce que, pour permettre une calibration en émission, l'antenne réseau comporte, en outre : un générateur (61) pour générer un signal de calibration (SP) ; un composant d'entrée (28) pour répliquer le signal de calibration simultanément en entrée de la chaine d'émission de chaque voie de la pluralité de voies ; le long de la chaine d'émission de chaque voie de la pluralité de voies, un module de marquage (23_i) pour marquer le signal de calibration au moyen d'un code de marquage en émission (CE_i) spécifique de la ladite voie pour obtenir un signal individuel d'émission marqué (SEcal_i).

## Description

La présente invention a pour domaine celui des procédés et des moyens de calibration des antennes réseau, notamment des antennes réseau actives - AESA (« Active Electronically Scanned Array » en anglais).

Une antenne réseau comporte une pluralité de voies, chaque voie associant un élément rayonnant et un module d'émission/réception, ou TR module (« Transmit-Receive module ») dans ce qui suit.

Un TR module comporte généralement une chaine d'émission et une chaine de réception, qui sont toutes les deux couplées à l'élément rayonnant au travers d'un duplexeur, comme un circulateur.

Chaque TR module intègre des composants programmables permettant de modifier l'amplitude et/ou la phase du signal (soit du signal d'émission pour la chaine d'émission, soit du signal de réception pour la chaine de réception), de manière à former un diagramme d'antenne particulier et/ou modifier la direction de pointage du faisceau de l'antenne réseau.

Cependant, pour un fonctionnement correct de l'antenne réseau, chaque TR module doit être calibré en amplitude et/ou en phase.

Plus précisément, la calibration d'une antenne réseau consiste à mesurer la phase relative, l'amplitude relative et le temps de groupe relatif d'un signal empruntant deux chemins différents au sein de l'antenne réseau et de compenser les biais ainsi mesurés en utilisant les composants programmables le long de l'un et/ou l'autre chemin.

Jusqu'à présent, en émission, le procédé de calibration généralement mis en oeuvre consiste à placer un capteur devant l'antenne réseau, à une certaine distance en vis-à-vis des éléments rayonnants. Puis, pour une calibration complète de l'antenne réseau, les voies de l'antenne réseau sont successivement activées en émission. Pour la voie active à l'instant courant, on mesure la phase et l'amplitude du signal émis par la chaine d'émission de la voie active et reçu par le capteur, à l'aide d'un analyseur.

En réception, le procédé de calibration généralement mis en oeuvre consiste à émettre un signal à l'aide d'un émetteur placé devant les éléments rayonnants de l'antenne réseau. Puis, pour une calibration complète de l'antenne réseau, les voies de l'antenne réseau sont successivement activées en réception. Pour la voie active à l'instant courant, on mesure l'amplitude et la phase du signal de réception en sortie de la chaîne de réception de la voie active à l'aide d'un analyseur.

Par exemple, un analyseur est un analyseur du type vectoriel - VNA (« Vector Network Analyzer ») qui réalise un balayage en fréquence et effectue des mesures en un certain nombre de points de l'intervalle de fréquence d'intérêt, i.e. l'intervalle de fréquence de fonctionnement de l'antenne réseau. Un tel analyseur nécessite un certain temps d'intégration pour atteindre la précision recherchée. La phase et l'amplitude sont mesurées pour chaque point. Le temps de propagation est calculé pour chaque point de l'intervalle de fréquence et le temps de groupe en est déduit, le temps de propagation étant défini par : Δφ/2πΔF, c'est-à-dire la différence de phase Δφ entre deux points consécutifs de l'intervalle de fréquence divisé par l'écart en fréquence ΔF entre ces deux points.

L'ensemble des mesures permettent de connaître la différence de phase et/ou la différence d'amplitude entre deux TR modules et de piloter les composants programmables de l'antenne réseau de manière à annuler, ou tout au moins réduire, ces biais.

Ce procédé de calibration de l'état de la technique présente de nombreux désavantages:
- il nécessite de positionner un capteur (ou un émetteur) devant chaque élément rayonnant de l'antenne pour calibrer la voie correspondante : ou bien il s'agit d'un unique capteur (ou émetteur) mobile afin de pouvoir être placé en vis-à-vis de l'élément rayonnant de la voie allant être activée, ou bien il s'agit d'un ensemble de capteurs (ou d'émetteurs), dont chaque capteur (ou émetteur) est pré-positionné en vis-à-vis d'un élément rayonnant particulier pour permettre la calibration de la voie correspondante lorsque celle-ci est activée. Le capteur (ou l'émetteur) peut être placé à proximité de l'antenne (calibration en champ proche) ou à distance de l'antenne (calibration en champ lointain). Cette calibration s'effectue en général dans des chambres sourdes dédiées. Il s'agit donc de moyens de calibration coûteux, dont la mise en place est complexe. Ils sont externes à l'antenne réseau à calibrer ;
- la calibration n'est pas mise en oeuvre dans des conditions opérationnelles. En particulier, les voies de l'antenne réseau sont activées indépendamment les unes des autres. Or, en fonctionnant normal, plusieurs voies sont activées simultanément et il peut exister des effets de couplage entre voies adressant des éléments rayonnants voisins. Ces couplages introduisent des biais en amplitude et en phase qu'il serait souhaitable de pouvoir calibrer ;
- puisqu'il y a activation successive des différentes voies, il s'agit d'un procédé de calibration qui nécessite un temps important de mise en oeuvre et ceci d'autant plus lorsque, pour chaque voie, une calibration sur plusieurs points en fréquence d'un intervalle de fréquence est réalisée ;
- puisque cette calibration s'effectue sur un temps long, cela peut entraîner une dérive en phase ou en amplitude de l'analyseur qui dégrade la précision sur la mesure de l'écart en phase on en amplitude évaluée entre deux voies.

Il serait donc souhaitable de disposer d'un procédé de calibration permettant de réaliser une calibration simultanée d'un ensemble de voies actives de l'antenne réseau, sans modifier profondément l'architecture ce cette antenne.

Le but de l'invention est alors de proposer un procédé de calibration permettant de répondre à ce besoin.

A cet effet, l'invention a pour objet une première antenne réseau comportant une pluralité de voies, chaque voie comportant une chaine d'émission associée à un élément rayonnant, caractérisée en ce que, pour permettre une calibration en émission, l'antenne réseau comporte, en outre : un générateur pour générer un signal de calibration ; un composant d'entrée pour répliquer le signal de calibration simultanément en entrée de la chaine d'émission de chaque voie de la pluralité de voies ; le long de la chaine d'émission de chaque voie de la pluralité de voies, un module de marquage pour marquer le signal de calibration au moyen d'un code de marquage en émission spécifique de la ladite voie pour obtenir un signal individuel d'émission marqué.

Suivant d'autres aspects avantageux de l'invention, la première antenne comprend une ou plusieurs des caractéristiques suivantes, prises isolément ou suivant toutes les combinaisons techniquement possibles :
- chaque voie comporte une chaine de réception associée à l'élément rayonnant, la chaine de réception et la chaine d'émission étant connectées à l'élément rayonnant via un duplexeur, le signal individuel d'émission marqué d'une voie est appliqué, par le duplexeur, en entrée de la chaine de réception de ladite voie, l'antenne comportant en outre : un composant de sortie pour produire un signal d'émission global résultant de la combinaison des signaux individuels d'émission marqués en sortie des chaines de réception des voies de la pluralité de voies ; un dispositif d'analyse pour traiter le signal d'émission global, en rejouant, pour chaque voie, le code de marquage en émission spécifique de ladite voie, de manière à isoler le signal individuel d'émission marqué de ladite voie, et déterminer un biais de calibration en émission affectant ladite voie.
- le signal individuel d'émission marqué d'une voie étant émis par l'élément rayonnant associé, l'antenne comporte en outre : un capteur pour acquérir un signal d'émission global résultant de la combinaison dans l'air des signaux individuels d'émission marqués émis par les voies de la pluralité de voies de l'antenne réseau et réfléchis par un réflecteur de calibration ; et un dispositif d'analyse pour traiter le signal d'émission global, en rejouant, pour chaque voie, le code de marquage en émission spécifique de ladite voie, de manière à isoler le signal individuel d'émission marqué de ladite voie, puis déterminer un biais de calibration en émission affectant ladite voie.
- chaque voie comporte une chaine de réception associée à l'élément rayonnant, le capteur est constitué par les chaines de réception et les éléments rayonnants d'un ensemble de voies actives en réception.

L'invention a également pour objet un ensemble de calibration en émission de la première antenne réseau précédente, caractérisé en ce que, le signal individuel d'émission marqué d'une voie étant émis par l'élément rayonnant associé, l'ensemble de calibration en émission comporte, outre l'antenne réseau elle-même, un système de calibration en émission comportant : un capteur pour acquérir un signal d'émission global résultant de la combinaison dans l'air des signaux individuels d'émission marqués émis par les voies de la pluralité de voies de l'antenne réseau ; et un dispositif d'analyse pour traiter le signal d'émission global obtenu en sortie du capteur, en rejouant, pour chaque voie, le code de marquage en émission spécifique de ladite voie, de manière à isoler le signal individuel d'émission marqué de ladite voie, puis déterminer un biais de calibration en émission affectant ladite voie.

L'invention a également pour objet une seconde antenne réseau comportant une pluralité de voies, chaque voie comportant une chaine de réception associée à un élément rayonnant, caractérisée en ce que, pour une calibration en réception, l'antenne réseau comporte : le long de la chaine de réception de chaque voie de la pluralité de voies, un module de marquage en réception pour marquer un signal de calibration en réception appliqué en entrée de ladite chaine de réception, au moyen d'un code de marquage en réception spécifique de ladite voie et obtenir un signal individuel de réception marqué ; un composant de sortie pour produire un signal de réception global résultant de la combinaison des signaux individuels de réception marqués en sortie des chaines de réception des voies de la pluralité de voies ; un dispositif d'analyse pour traiter le signal de réception global, en rejouant, pour une voie particulière de la pluralité de voies, le code de marquage en réception spécifique de ladite voie particulière, de manière à isoler le signal individuel de réception marqué de ladite voie particulière, puis déterminer un biais de calibration en réception affectant ladite voie particulière.

Suivant d'autres aspects avantageux de l'invention, la seconde antenne comprend une ou plusieurs des caractéristiques suivantes, prises isolément ou suivant toutes les combinaisons techniquement possibles :
- chaque voie comporte une chaine d'émission associée à l'élément rayonnant, la chaine de réception et la chaine d'émission étant connectées à l'élément rayonnant via un duplexeur, l'antenne réseau comporte : un générateur pour générer un signal de calibration ; un composant d'entrée pour répliquer le signal de calibration simultanément en entrée de chaque chaine d'émission des voies de la pluralité de voies, pour chaque voie de la pluralité de voies, le duplexeur de ladite voie appliquant le signal en sortie de la chaine d'émission de ladite voie, en entrée de la chaine de réception de ladite voie en tant que signal de calibration en réception.

- l'antenne comporte en outre : un générateur pour générer un signal de calibration ; un émetteur pour émettre le signal de calibration, pour chaque voie de la pluralité de voies, le signal de calibration en réception appliqué en entrée de la chaine de réception d'une voie étant le signal de calibration émis dans l'air par l'émetteur, réfléchis par un réflecteur de calibration, et reçu par l'élément rayonnant de ladite voie.
- chaque voie comportant une chaine d'émission associée à l'élément rayonnant, l'émetteur est constitué par les chaines d'émission et les éléments rayonnants d'un ensemble de voies actives en émission.

L'invention a également pour objet un ensemble de calibration en réception de la seconde antenne réseau précédente, caractérisé en ce que l'ensemble de calibration en réception comporte, outre l'antenne réseau, un système de calibration en réception comportant : un générateur pour générer un signal de calibration; un émetteur pour émettre le signal de calibration, pour chaque voie de la pluralité de voies, le signal de calibration appliqué en entrée de la chaine de réception de ladite voie étant le signal de calibration émis par l'émetteur.

De préférence, un biais de calibration en émission et/ou en réception est une phase, une amplitude et/ou un temps de propagation de groupe.

De préférence, un signal de calibration étant un signal de porteuse, un module de marquage d'une voie module le signal de porteuse en tenant compte du code de marquage spécifique de ladite voie, et un dispositif d'analyse démodule le signal global en tenant compte du code de marquage spécifique de ladite voie.

De préférence, le code de marquage d'une voie est un code pseudo-aléatoire.

L'invention a également pour objet antenne réseau conforme à la première antenne précédente et à la seconde antenne précédente.

L'invention apparaîtra plus clairement à la lecture de la description qui va suivre, donnée uniquement à titre d'exemple non limitatif, et faite en référence aux dessins dans lesquels :
La figure 1 représentation d'un mode de réalisation d'un ensemble selon l'invention associant une antenne réseau 16 et un système de calibration 15 pour la mise en oeuvre d'un procédé de calibration en émission ou d'un procédé de calibration en réception ;
La figure 2 est une représentation du marquage d'un signal de porteuse ;
La figure 3 est une représentation d'un mode de réalisation d'un dispositif d'analyse de l'ensemble de la figure 1 ; et,
La figure 4 est une représentation d'un mode de réalisation d'un module de corrélation du dispositif d'analyse de la figure 3.

De manière générale, la présente invention se fonde sur le marquage, par chaque voie active, du signal qu'elle émet (ou reçoit), au moyen d'un code spécifique. Ceci permet ensuite aux moyens d'analyse de séparer la contribution de chaque voie active dans le signal global émis (ou reçu) lors de la calibration de l'antenne réseau. C'est cette capacité à distinguer la contribution de chaque voie qui autorise la calibration simultanée de plusieurs voies.

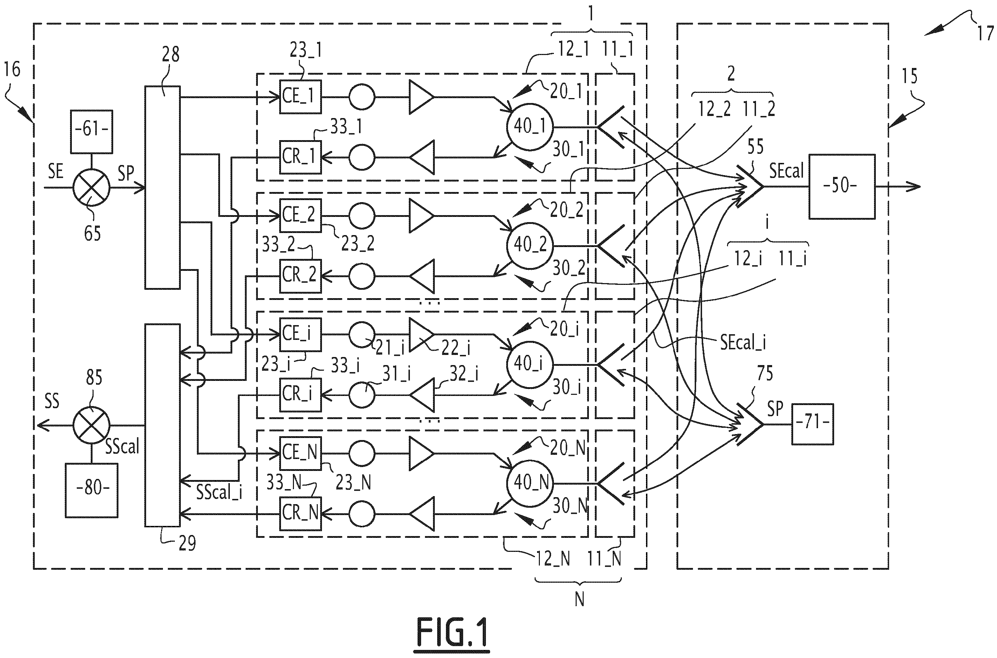

La figure 1 représente un mode de réalisation d'un ensemble 17 selon l'invention, qui associe une antenne réseau 16 et un système de calibration 15 pour la mise en oeuvre d'un procédé de calibration en émission ou la mise en oeuvre d'un procédé de calibration en réception.

De manière connue en soi, l'antenne réseau 16 comporte une pluralité de N voies. Sur la figure 1, chaque voie est référencée par son rang i, entier entre 1 et N .

Le nombre N de voies peut varier de quelques dizaines à quelques centaines de voies pour une antenne réseau d'un système radar ou d'un système de radiocommunication. Dans ce qui suit, la voie i est décrite comme voie générique.

Chaque voie i associe un élément rayonnant 11_i et un module d'émission/réception, ou TR module, 12_i. Le TR module est connecté électriquement à l'élément rayonnant associé.

Ainsi, la première voie 1 comporte un élément rayonnant 11_1 et un TR module 12_1 ; la seconde voie 2 comporte un élément rayonnant 11_2 et un TR module 12_2 ; ... et, la Nième voie N comporte un élément rayonnant 11_N et un TR module 12_N.

Un élément rayonnant 11_i est par exemple une antenne patch, électriquement connectée au TR module 12_i associé par au moins une ligne d'alimentation. En émission, le TR module excite l'élément rayonnant au moyen d'un signal électrique d'émission de manière à ce qu'il émette une onde électromagnétique en avant du plan de l'antenne réseau. En réception, une onde électromagnétique incidente excite l'élément rayonnant, qui applique un signal électrique de réception au TR module.

Chaque TR module 12_i comporte une chaine d'émission 20_i et une chaine de réception 30_i en parallèle l'une de l'autre. Elles sont connectées, au travers d'un moyen d'aiguillage, tel qu'un circulateur 40_i, à la ligne d'alimentation de l'élément rayonnant 11_i correspondant.

Ainsi, le TR module 12_1 comporte une première chaîne d'émission 20_1 et une première chaîne de réception 30_1 connectées, via un premier circulateur40_1, au premier élément rayonnant 11_1 ; le TR module 12_2 comporte une seconde chaîne démission 20_2 et une seconde chaîne de réception 30_2 connectées, via un second circulateur 40_2, au second élément rayonnant 11_2 ; ... et, le TR module 12_N comporte une chaîne d'émission 20_N et une chaîne de réception 30_N connectées, via un circulateur 40_N, à l'élément rayonnant 11_N.

En outre, l'antenne réseau 16 comporte un composant d'entrée 28 permettant de recevoir, d'une électronique d'émission (non représentée sur les figures), un signal d'émission SE à émettre, et de répéter ce signal d'émission sur l'entrée de chacune des chaines d'émission des différents TR modules de l'antenne 16.

L'antenne réseau 16 comporte un composant de sortie 29 permettant de combiner les signaux de réception individuels, délivrés en sortie de chacune des chaîne de réception des différents TR modules de l'antenne 16, de manière à transmettre un signal de réception SS vers une électronique de traitement (non représentée sur les figures).

De manière classique, une chaine d'émission 20_i comporte, en série, un déphaseur 21_i et un ou plusieurs amplificateur(s) 22_i.

Dans le cas d'une antenne passive, le déphaseur est programmable et l'amplificateur est un amplificateur de puissance.

Dans le cas d'une antenne active, au moins un amplificateur est programmable. Par exemple, en plus de l'amplificateur de puissance, la chaine d'émission comporte un amplificateur programmable, comme un amplificateur d'atténuation.

De manière classique, chaque chaine de réception 30_i comporte, en série, un ou plusieurs amplificateur(s) 32_i et un déphaseur 31_i.

Dans le cas d'une antenne passive, le déphaseur est programmable et l'amplificateur est un amplificateur faible bruit.

Dans le cas d'une antenne active, au moins un amplificateur est programmable. Par exemple, en plus d'un amplificateur faible bruit, la chaine de réception comporte un amplificateur programmable, comme un amplificateur d'atténuation.

Un composant programmable participe à la formation du faisceau d'antenne.

Selon l'invention, pour une calibration en émission, l'antenne réseau 16 est adaptée de manière à comporter un générateur de porteuse 61 et un interrupteur 65.

Le signal de porteuse SP délivré par le générateur 61 est de préférence un signal sinusoïdal de fréquence Fo.

L'interrupteur 65 permet d'appliquer, sur l'entrée du module 28, soit le signal d'émission SE à émettre au cours d'une phase de fonctionnement opérationnel de l'antenne 16, soit le signal de porteuse SP au cours d'une phase de calibration en émission de l'antenne 16. De la sorte, un signal identique est distribué en entrée de chacune des voies de l'antenne.

De plus, pour une calibration en émission, chaque chaîne d'émission 20_i de l'antenne 16 intègre un module de marquage 23_i ayant pour fonction de marquer le signal cheminant à travers la chaine d'émission 20_i, en fonction d'un code de marquage CE_i spécifique de ladite chaîne d'émission 20_i.

Ainsi, la première chaine d'émission 20_1 comporte un module de marquage 23_1 utilisant un code CE_1 ; la seconde chaine d'émission 20_2 comporte un module de marquage 23_2 utilisant un code CE_2 ; ... et, la Nième chaine d'émission 20_N comporte un module de marquage 23_N utilisant un code CE_N.

Dans un mode de réalisation préféré, un module de marquage 23_i est un déphaseur 0/π piloté par un microcontrôleur mémorisant le code de marquage CE_i, qui est spécifique de la voie i. Le déphaseur 0/π est par exemple, pour le cas d'une chaine d'émission fonctionnant en différentiel, un mélangeur de Gilbert à base de transistors.

Le code de marquage CE_i est un code binaire, constitué d'une série de L bits. Par exemple, L est égal à 1000 bits.

De préférence, on utilise des codes de marquage ayant des propriétés d'orthogonalité entre eux, dit codes pseudo-orthogonaux.

De préférence, le code de marquage est un code pseudo-aléatoire - PRN (« Pseudo Random Noise »). Il s'agit d'un code binaire obtenu par tirage aléatoire selon une distribution gaussienne de manière à correspondre à un bruit blanc.

En variante, il s'agit d'un code de Gold.

Le code de marquage est préalablement généré et associé à une chaîne d'émission 20_i particulière de l'antenne, par exemple en le stockant dans le microcontrôleur de pilotage du déphaseur 0/π.

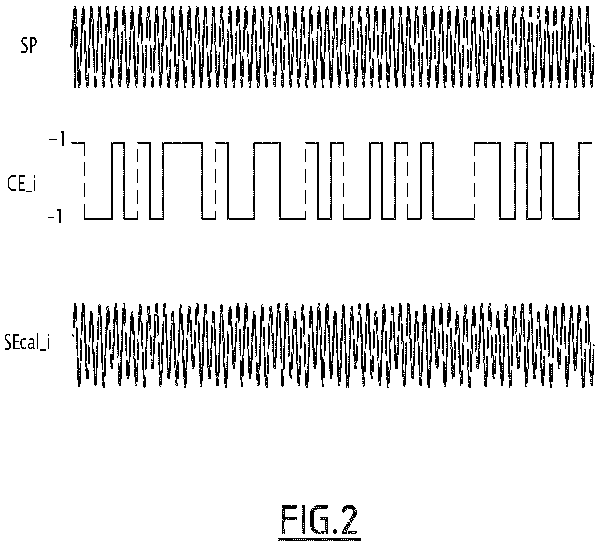

Comme représenté sur la figure 2, le signal de porteuse SP est un signal sinusoïdal avec une fréquence caractéristique Fo.

Le déphaseur 0/π introduit dans la phase du signal de porteuse SP un déphasage de 0° pendant une période Tc lorsque le bit correspondant du code de marquage CE_i vaut 1 et un déphasage de π pendant la période Tc lorsque le bit correspondant du code de marquage CE_i vaut 0.

La période Tc est prédéterminée.

Le signal de porteuse ainsi marqué constitue le signal individuel d'émission SEcal_i par la voie i considérée au cours de la calibration en émission.

Lorsque l'on cherche à calibrer en émission l'ensemble des N voies de l'antenne 16, il y donc émission simultanée de N signaux individuels d'émission SEcal_i, qui se combinent de manière à constituer un signal global d'émission SEcal.

Pour le procédé de calibration en émission, le système de calibration 15 comporte un récepteur 55. Il est adapté pour capter le signal global d'émission SEcal produit par les voies actives de l'antenne réseau 16 à calibrer en émission.

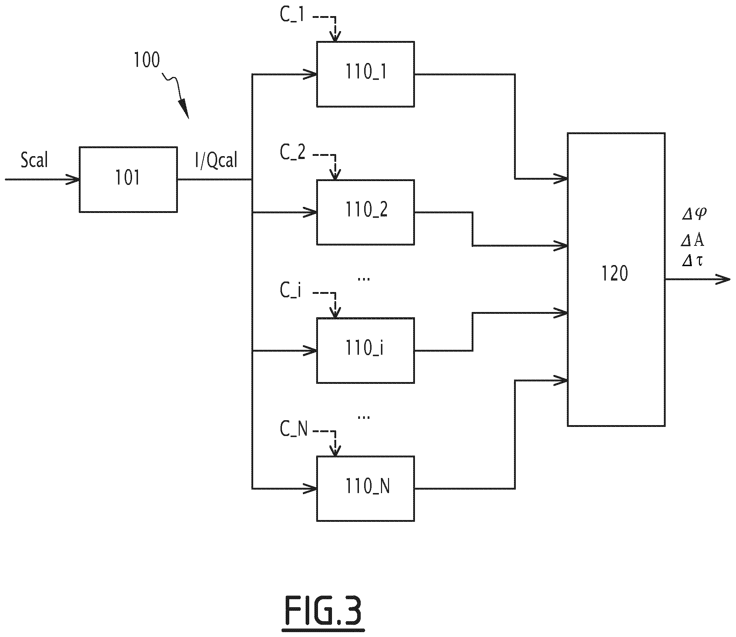

Le système de calibration 15 comporte, connecté en sortie du récepteur 55, un dispositif d'analyse 50. Une structure possible du dispositif d'analyse sera présentée en relation avec la figure 3. Le dispositif d'analyse est capable de rejouer le code de marquage CE_i de chaque voie i pour isoler la contribution individuelle SEcal_i de cette voie i dans le signal global d'émission SEcal. A partir des contributions individuelles, SEcal_i, le dispositif d'analyse 50 détermine les biais de calibration en émission affectant chaque des voies i.

Selon l'invention, pour une calibration en réception de l'antenne 16, le système de calibration 15 comporte un générateur de porteuse 71 et un émetteur 75, qui est connecté en sortie du générateur 71 de manière à émettre une onde électromagnétique correspondant au signal de porteuse délivré par le générateur 71.

Le signal de porteuse SP généré par le générateur 71 est de préférence un signal sinusoïdal, par exemple de fréquence Fo. En variante, la fréquence de la porteuse pour la calibration en émission est différente de celle utilisée pour la calibration en réception.

Pour le procédé de calibration en réception, l'antenne réseau 16 est adaptée de manière à ce que chacune des chaînes de réception 30_i des différentes voies i de l'antenne 16 soit équipée d'un module de marquage 33_i.

Ce module de marquage permet de marquer, au moyen d'un code de marquage CR_i, spécifique de la voie i, le signal cheminant le long de cette voie fonctionnant en réception. Ce signal, ou signal individuel de réception SScal_i, correspond à la fraction du signal de porteuse SP captée par l'élément rayonnant 11_i correspondant.

Ainsi, la première chaine de réception 30_1 comporte un module de marquage 33_1 utilisant un premier code de marquage en réception CR_1 ; la seconde chaine de réception 30_2 comporte un module de marquage 33_1 utilisant un second code de marquage en réception CR_2; ... et, la Nième chaine de réception 30_N comporte un module de marquage 33_N utilisant un Nième code de marquage CR_N.

Par exemple, la structure d'un module de marquage en réception est similaire à celle d'un module de marquage en émission. Il est adapté pour moduler le signal individuel de réception avec un code de marquage qui est spécifique de la chaîne de réception considérée.

Le code de marquage en réception CR_i de la voie i est avantageusement différent du code de marquage en émission CE_i de cette même voie.

Chaque voie de réception délivre un signal individuel de réception marqué SScal_i.

Le module 29 agrège les signaux individuels de réception marqués en un signal de réception global SSCal.

Enfin, toujours pour la calibration en réception, l'antenne réseau 16 comporte, en sortie du module 29, un interrupteur 85 permettant, lors de la phase de calibration en réception, la transmission du signal de réception global SSCal vers un dispositif d'analyse 80. Une structure possible du dispositif d'analyse sera présentée en référence à la figure 3. Le dispositif d'analyse 80 est capable de rejouer le code de marquage CR_i de chaque voie i pour isoler la contribution individuelle SScal_i de cette voie dans le signal global de réception SScal. A partir des contributions individuelles, SScal_i, le dispositif d'analyse 80 détermine les biais de calibration en réception affectant chacune des voies i activées lors de la calibration en réception.

Comme représenté de manière schématique sur la figure 3, un dispositif d'analyse 100, comme le dispositif 50 ou le dispositif 80, comporte un module de traitement 101 permettant par exemple d'extraire les composantes I et Q du signal global Scal (correspondant à SScal en réception et SEcal en émission).

Le dispositif d'analyse 100 comporte, en aval du module de traitement 101, une pluralité de modules de corrélation, disposés en parallèle les uns des autres. Ils prennent chacun en entrée le signal global I/Qcal traité par le module 101.

Pour simplifier la description, le nombre de modules de corrélation est choisi égal au nombre N de voies de l'antenne réseau 16 à calibrer.

Ainsi, le dispositif d'analyse 100 comporte un premier module de corrélation 110_1, un second module de corrélation 110_2, ; ... un ième module de corrélation 110_i ; ... et un Nième module de corrélation 110_N.

Chaque module de corrélation 110_i est associé à une unique voie i de l'antenne 16. Il est configuré avec le code de marquage C_i spécifique de cette voie (le code de marquage CE_i de la chaine d'émission pour le dispositif 50 et le code de marquage CR_i de la chaine de réception pour celui du dispositif 80).

Chaque dispositif de corrélation 110_i est alors adapté pour isoler la contribution individuelle Scal_i (SEcal-i en émission et SScal_i en réception) de la voie i à laquelle il est associé dans le signal global I/Qcal traité par le module 101.

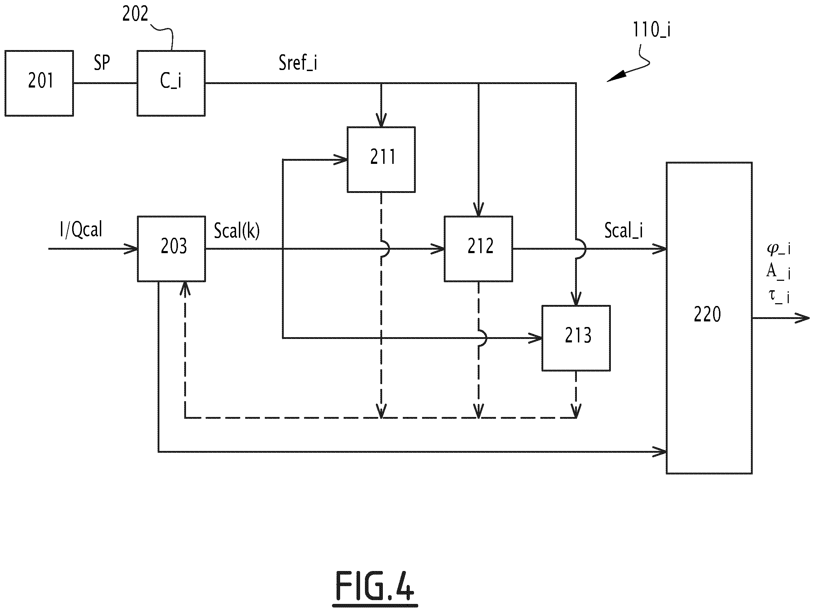

Plus précisément, comme représenté sur la figure 4, un module de corrélation 110_i comporte par exemple :
- un générateur de porteuse 201, adapté pour générer un signal de porteuse identique au signal de porteuse que celui généré par le module 61 pour le dispositif 50, ou par le module 71 pour le dispositif 80 ;
- Un modulateur 202, comme un déphaseur 0/π piloté par un microcontrôleur, configuré avec le code de marquage C_i (CE_i en émission et CR_i en réception) de la la voie i associée, afin de moduler le signal de porteuse SP avec le code de marquage spécifique de la voie i et obtenir un signal de référence Sref_i pour cette voie ;
- Un module 203 de déphasage incrémentiel du signal global traité I/Qcal pour générer un signal global retardé d'un nombre k de périodes Tc, Scal(k) ;
- Des premier, second et troisième corrélateurs, 211, 212, 213, propres à effectuer une corrélation entre le signal Scal(k) et une réplique du signal de référence Sref_i en avance de phase par rapport au signal Sref_i pour le premier corrélateur 211, une réplique du signal de référence Sref_i synchronisée avec le signal Sref_i pour le second corrélateur 212, et une réplique du signal de référence Sref_i en retard de phase par rapport au signal Sref_i pour le troisième corrélateur 213. Les premier et troisième corrélateurs sont décalés du second corrélateur d'une fraction de la période Tc.

Un corrélateur effectue le produit du signal global retardé par la réplique du signal de référence.

Lorsque les deux signaux en entrée d'un corrélateur sont marqués par le même code de marquage et lorsqu'ils sont parfaitement synchronisés, la corrélation est maximale. Il est à noter qu'appliquer deux fois un code PRN successivement sur un même signal permet de retrouver le signal initial.

En revanche, dès qu'il y a une perte de synchronisation entre les deux signaux d'entrée, même s'ils sont marqués par le même code de marquage, la corrélation diminue rapidement et est sensiblement égale à zéro.

Lorsque les deux signaux d'entrée sont marqués par des codes de marquage différents, la corrélation est nulle, indépendamment de toute synchronisation. A cause de cette propriété, on dit que les codes de marquage sont orthogonaux entre eux.

Le signal global traité est retardé par le module 203 avant d'être appliqué en entrée des trois corrélateurs. Au moyen d'une boucle d'asservissement, ce retard est modifié progressivement par incrément égal à la période Tc pour rechercher un maximum de corrélation sur le second corrélateur 212.

Un fois le maximum de corrélation identifié, une synchronisation sur la phase de la porteuse a été obtenue, ainsi qu'une synchronisation sur le code de marquage.

Le second corrélateur transmet alors le signal résultant du produit du signal global retardé Scal(k) multiplié par le signal de référence Sref_i à un analyseur 220.

Ce signal résultant n'est autre que la contribution Scal_i de la voie i au signal global Scal.

L'analyseur 220 est avantageusement un analyseur vectoriel conforme à l'état de la technique.

Il évalue l'amplitude A_i du signal Scal_i de la voie i.

Il peut interroger le module de retard 203 pour connaître le nombre k de périodes utilisées pour retarder le signal global. Cette information correspond à la phase φ_i du signal Scal_i de la voie i.

L'analyseur 220 peut effectuer des mesures pour différents points d'un intervalle en fréquence autour de la fréquence F₀ afin de déterminer le temps de propagation de groupe τ_i du signal Scal_i de la voie i.

Les sorties des différents analyseurs des modules de corrélation 110_i sont associées par un module de calcul 120 (figure 3) du dispositif d'analyse 100.

Le module 120 est notamment adapté pour calculer des écarts de phase Δφ, d'amplitude ΔA et/ou de temps de propagation de groupe Δτ entre deux voies, en émission ou en réception, qui sont les biais de calibration recherchés.

Les opérations de calibration peuvent alors être réalisées en fonction de ces informations, à l'aide des éléments programmables (déphaseur / atténuateur) disponibles sur chaque voie i.

Il est à noter que les figure 1, 3 et 4 ont été décrites sous une forme structurelle, chaque composant du système réalisant une fonction particulière. Cependant, ces figures pourraient tout aussi bien être décrites sous une forme procédurale, chaque étape correspondant à la mise en oeuvre d'une fonction, c'est-à-dire à l'utilisation du composant fonctionnel correspondant.

Dans un second mode de réalisation, au lieu d'utiliser un système de calibration 15, un réflecteur est placé devant l'antenne 16. Les propriétés, notamment de position et de surface équivalente radar du réflecteur sont connues. Alternativement « un radôme caisson » dédié peut être utilisé.

Pour une mise en oeuvre du procédé de calibration en émission, c'est l'antenne fonctionnant en réception qui analyse le signal SEcal émis et réfléchi par le réflecteur vers l'antenne. Le dispositif d'analyse 80 est alors configuré avec les codes de marquage CE_i des différentes chaines d'émission pour extraire leurs contributions respectives.

Pour une mise en oeuvre du procédé de calibration en réception, c'est l'antenne fonctionnant en émission qui émet le signal SScal. Le dispositif d'analyse 80 est alors configuré avec les codes de marquage CR_i des différentes chaines de réception pour extraire leurs contributions respectives.

En variante, l'antenne réseau n'est apte à fonctionner qu'en émission, chacune de ses différentes voies ne comportant alors qu'une chaîne d'émission. Seul le procédé de calibration en émission est alors à mettre en oeuvre. Il est mis en oeuvre par des moyens de calibration reprenant les fonctions des blocs 55 et 50 du mode de réalisation de la figure 1. Ces moyens peuvent être externes à l'antenne réseau, comme dans le mode de réalisation de la figure 1, soit intégrés à l'antenne réseau et en utilisant un réflecteur pour réfléchir le signal de calibration en émission vers l'antenne réseau.

En variante, l'antenne réseau n'est apte à fonctionner qu'en réception, chacune de ses différentes voies ne comportant qu'une chaîne réception. Seul le procédé de calibration en réception est alors à mettre en oeuvre. Il est mis en oeuvre par des moyens de calibration reprenant les fonctions des composants 71 et 75 du mode de réalisation de la figure 1. Ces moyens peuvent être externes à l'antenne réseau, comme dans le mode de réalisation de la figure 1, soit intégrés à l'antenne réseau et en utilisant un réflecteur pour réfléchir le signal de calibration en réception vers l'antenne réseau.

La présente invention ne se limite pas à une calibration en mode rayonné mais peut également s'appliquer à une calibration en mode conduit. C'est-à-dire que le signal émis par la chaine d'émission d'une voie n'est pas appliqué par le circulateur de cette voie vers l'élément rayonnant associé, mais réinjecté par le circulateur directement en entrée de la chaine de réception de ladite voie. Cela permet de calibrer non pas l'ensemble de la voie, chaine d'émission et élément rayonnant en émission et/ou élément rayonnant et chaine de réception en réception, mais simplement la chaine d'émission et/ou la chaine de réception. Les moyens de calibration sont simplifiés dans la mesure où il n'est plus nécessaire, en émission, de capter un signal émis dans l'air et/ou en réception, d'émettre un signal dans l'air.

La calibration selon l'invention peut être simplifiée en s'abstenant de l'asservissement sur la porteuse et en restreignant le domaine de recherche en phase, connaissant la distance entre le plan antennaire et le système de calibration ou le réflecteur.

La présente invention est compatible d'un mode continu (ondes entretenues - CW) ou d'un mode pulsé. En effet, dans ce dernier cas, le rythme du codage est adapté à la largeur de l'impulsion et à sa fréquence de récurrence.

Le code de marquage est soit modifié à chaque récurrence et le traitement est réalisé de la même façon que le mode continu, soit distribué par échantillon sur la largeur de l'impulsion et concaténé à réception avant démodulation.

La présente invention présente de nombreux avantages :
La solution proposée ajoute peu de complexité à l'architecture physique des antennes puisqu'elle s'appuie sur l'utilisation de ressources déjà disponibles ou facilement intégrables à l'architecture d'une antenne réseau sans perturber la chaîne d'émission ou de réception. Elle est débrayable pour le fonctionnement opérationnel normal de l'antenne réseau. La fonctionnalité de calibration est alors totalement transparente.

Elle permet une mesure globale à l'aide d'un seul capteur (ou émetteur). La solution proposée ne nécessite pas de moyens de test extérieurs complexes. Pas de besoin de capteur en vis-à-vis de chaque élément rayonnant. Au contraire elle se réduit à une seule antenne en émission pour calibrer un AESA en réception ou en réception pour calibrer l'AESA en émission. Ainsi on peut réaliser la calibration en champ proche ou lointain suivant le besoin.

Dans le mode de réalisation avec réflecteur, l'antenne réseau peut même réaliser des opérations du type autotest ou auto-calibration. L'antenne réseau peut être calibrée en utilisant ses seules ressources, c'est-à-dire sans avoir besoin d'appareils spécifiques externes. Il s'agit donc d'une solution pour la calibration particulièrement simple à mettre en oeuvre.

Avec l'invention, la calibration n'est plus sensible aux couplages entre voies, puisqu'elle est avantageusement mise en oeuvre alors que les voie voisines sont actives de sorte que l'on tient compte des couplages électromagnétiques entre ces voies. Cette solution permet donc de réaliser la calibration d'une antenne dans les conditions opérationnelles en tenant compte des interactions entre voies.

La mise en oeuvre de la présente invention permet de réduire considérablement le temps de validation d'une antenne réseau du fait de la calibration simultanée d'un grand nombre de voies, voire de l'ensemble des voies.

Cette solution permet de réaliser la calibration d'une antenne dans les conditions opérationnelles c'est-à-dire en tenant compte de l'échauffement thermique de l'ensemble des voies.

Outre la calibration, le marquage des signaux, notamment en réception, pourrait permettre la réalisation de traitements spécifiques.

Le procédé de calibration selon l'invention se traduit par une augmentation de la précision :
- le temps de propagation de groupe est mesuré en une seule opération de mesure.
- la mesure simultanée des écarts de phases et d'amplitudes de chaque TR module pour différents niveaux de puissance d'émission des TR modules.
- la mesure simultanée des écarts de phases et d'amplitudes de chaque TR module alors que tous les TR modules sont en opérations.

De plus la dérive de phase créée par la compression du signal dans les amplificateurs de la chaîne d'émission ou de réception peut être mesurée. Cette information permet de caler les voies sur un niveau de compression souhaité.

Par rapport à une mesure au VNA, cette technique permet d'obtenir le temps groupe en une seule mesure sur la bande d'étalement du code utilisé.

Cette solution peut être utilisée sur toute la plage de fonctionnement en fréquence du système.

Cette solution peut être utilisée sur une grande dynamique de puissance du signal le niveau de précision dépendant du rapport signal sur bruit lié à la longueur du code utilisé, le débit et le nombre de voies traitées simultanément.

## Revendications

1. Antenne réseau comportant une pluralité de voies, chaque voie (i) comportant une chaine d'émission (20_i) associée à un élément rayonnant (11_i), **caractérisée en ce que**, pour permettre une calibration en émission, c'est-à-dire une mesure d'un biais de calibration en émission, le biais de calibration en émission étant une phase, une amplitude et/ou un temps de propagation de groupe, l'antenne réseau comporte, en outre :
- un générateur (61) pour générer un signal de calibration en émission (SP) ;
- un composant d'entrée (28) pour répliquer le signal de calibration en émission simultanément en entrée de la chaine d'émission de chaque voie de la pluralité de voies ;
- le long de la chaine d'émission de chaque voie de la pluralité de voies, un module de marquage en émission (23_i) pour marquer le signal de calibration en émission au moyen d'un code de marquage en émission (CE_i) spécifique de la ladite voie pour obtenir un signal individuel d'émission marqué (SEcal_i), le code de marquage en émission d'une voie étant un code pseudo-aléatoire,
le signal de calibration en émission étant un signal de porteuse, le module de marquage en émission d'une voie module le signal de porteuse en tenant compte du code de marquage en émission spécifique de ladite voie, le module de marquage en émission étant un déphaseur 0/π piloté par un microcontrôleur mémorisant le code de marquage en émission spécifique de ladite voie.

2. Antenne selon la revendication 1, dans laquelle, chaque voie (i) comportant une chaine de réception (30_i) associée à l'élément rayonnant (11_i), la chaine de réception (30_i) et la chaine d'émission (20_i) étant connectées à l'élément rayonnant (11_i) via un duplexeur (40_i), le signal individuel d'émission marqué (SEcal_i) d'une voie est appliqué, par le duplexeur, en entrée de la chaine de réception de ladite voie, l'antenne comportant en outre :
- un composant de sortie (29) pour produire un signal d'émission global résultant de la combinaison des signaux individuels d'émission marqués en sortie des chaines de réception des voies de la pluralité de voies ;
- un dispositif d'analyse adapté pour démoduler le signal d'émission global, en rejouant, pour chaque voie (i), le code de marquage en émission (CE_i) spécifique de ladite voie, de manière à isoler le signal individuel d'émission marqué (SEcal_i) de ladite voie, et déterminer un biais de calibration en émission affectant ladite voie.

3. Antenne selon la revendication 1, dans laquelle le signal individuel d'émission marqué (SEcal_i) d'une voie étant émis par l'élément rayonnant (11_i) associé, l'antenne comporte en outre :
- un capteur pour acquérir un signal d'émission global (SEcal) résultant de la combinaison dans l'air des signaux individuels d'émission marqués émis par les voies de la pluralité de voies de l'antenne réseau et réfléchis par un réflecteur de calibration ; et,
- un dispositif d'analyse adapté pour démoduler le signal d'émission global, en rejouant, pour chaque voie (i), le code de marquage en émission (CE_i) spécifique de ladite voie, de manière à isoler le signal individuel d'émission marqué (SEcal_i) de ladite voie, puis déterminer un biais de calibration en émission affectant ladite voie.

4. Antenne selon la revendication 3, dans laquelle, chaque voie (i) comportant une chaine de réception (30_i) associée à l'élément rayonnant (11_i), le capteur est constitué par les chaines de réception et les éléments rayonnants d'un ensemble de voies actives en réception.

5. Ensemble de calibration en émission d'une antenne selon la revendication 1, **caractérisé en ce que**, le signal individuel d'émission marqué (SEcal_i) d'une voie étant émis par l'élément rayonnant (11_i) associé, l'ensemble de calibration en émission comporte, outre l'antenne réseau elle-même, un système de calibration en émission comportant :
- un capteur (55) pour acquérir un signal d'émission global (SEcal) résultant de la combinaison dans l'air des signaux individuels d'émission marqués émis par les voies de la pluralité de voies de l'antenne réseau ; et,
- un dispositif d'analyse (50) adapté pour démoduler le signal d'émission global obtenu en sortie du capteur, en rejouant, pour chaque voie (i), le code de marquage en émission (CE_i) spécifique de ladite voie, de manière à isoler le signal individuel d'émission marqué (SEcal_i) de ladite voie, puis déterminer un biais de calibration en émission affectant ladite voie.

6. Antenne réseau comportant une pluralité de voies, chaque voie (i) comportant une chaine de réception (30_i) associée à un élément rayonnant (11_i), **caractérisée en ce que**, pour une calibration en réception, c'est-à-dire une mesure d'un biais de calibration en réception, le biais de calibration en réception étant une phase, une amplitude et/ou un temps de propagation de groupe, l'antenne réseau comporte :
- le long de la chaine de réception (30_i) de chaque voie (i) de la pluralité de voies, un module de marquage en réception (33_i) pour marquer un signal de calibration en réception appliqué en entrée de ladite chaine de réception, au moyen d'un code de marquage en réception (CR_i) spécifique de ladite voie et obtenir un signal individuel de réception marqué (SScal_i), le code de marquage en réception d'une voie étant un code pseudo-aléatoire, le signal de calibration en réception étant un signal de porteuse, le module de marquage en réception d'une voie module le signal de porteuse en tenant compte du code de marquage en réception spécifique de ladite voie, le module de marquage en réception étant un déphaseur 0/π piloté par un microcontrôleur mémorisant le code de marquage en réception spécifique de ladite voie ;
- un composant de sortie (29) pour produire un signal de réception global (SScal) résultant de la combinaison des signaux individuels de réception marqués en sortie des chaines de réception des voies de la pluralité de voies ;
- un dispositif d'analyse (80) adapté pour démoduler le signal de réception global, en rejouant, pour une voie (i) particulière de la pluralité de voies, le code de marquage en réception (CR_i) spécifique de ladite voie particulière, de manière à isoler le signal individuel de réception marqué (SScal_i) de ladite voie particulière, puis déterminer un biais de calibration en réception affectant ladite voie particulière.

7. Antenne selon la revendication 6, dans laquelle, chaque voie (i) comportant une chaine d'émission (20_i) associée à l'élément rayonnant (11_i), la chaine de réception (30_i) et la chaine d'émission (20_i) étant connectées à l'élément rayonnant (11_i) via un duplexeur (40_i), l'antenne réseau comporte :
- un générateur pour générer un signal de calibration (SP) ;
- un composant d'entrée (28) pour répliquer le signal de calibration simultanément en entrée de chaque chaine d'émission des voies de la pluralité de voies,
pour chaque voie de la pluralité de voies, le duplexeur de ladite voie appliquant le signal en sortie de la chaine d'émission de ladite voie, en entrée de la chaine de réception de ladite voie en tant que signal de calibration en réception.

8. Antenne selon la revendication 6, comportant en outre :
- un générateur pour générer un signal de calibration (SP) ;
- un émetteur pour émettre le signal de calibration,
pour chaque voie de la pluralité de voies, le signal de calibration en réception appliqué en entrée de la chaine de réception d'une voie (i) étant le signal de calibration émis dans l'air par l'émetteur, réfléchis par un réflecteur de calibration, et reçu par l'élément rayonnant (11_i) de ladite voie.

9. Antenne selon la revendication 8, dans laquelle, chaque voie (i) comportant une chaine d'émission (20_i) associée à l'élément rayonnant (11_i), l'émetteur est constitué par les chaines d'émission et les éléments rayonnants d'un ensemble de voies actives en émission.

10. Ensemble de calibration en réception d'une antenne réseau conforme à la revendication 6, **caractérisé en ce que** l'ensemble de calibration en réception comporte, outre l'antenne réseau, un système de calibration en réception comportant :
- un générateur (71) pour générer un signal de calibration (SP) ;
- un émetteur (75) pour émettre le signal de calibration,
pour chaque voie de la pluralité de voies, le signal de calibration appliqué en entrée de la chaine de réception (30_i) de ladite voie (i) étant le signal de calibration émis par l'émetteur.

11. Antenne réseau selon l'une quelconque des revendications 1 à 4 et, en combinaison, selon l'une quelconque des revendications 6 à 9.
